Europäisches Patentamt

European Patent Office

Office européen des brevets

(11) Publication number: **0 258 803**

**A2**

# EUROPEAN PATENT APPLICATION

(21) Application number: 87112374.1

(51) Int. Cl.⁴ **H04N 5/45**

(22) Date of filing: 26.08.87

(30) Priority: 02.09.86 IT 4574286

(43) Date of publication of application:
**09.03.88 Bulletin 88/10**

(84) Designated Contracting States:
**DE ES FR GB NL SE**

(71) Applicant: **SELECO S.p.A.**
**Viale Treviso, 15**
**I-33170 Pordenone(IT)**

(72) Inventor: **Carniel, Alessandro**
**Via Pergolesi 6**
**Trieste(IT)**

(74) Representative: **Gustorf, Gerhard, Dipl.-Ing.**
**Mühlenstrasse 1**
**D-8300 Landshut(DE)**

(54) **Improved television receiver.**

(57) An improved television receiver is described, providing a screen for reproducing pictures and a device comprising first circuit means in order to insert into a first picture, reproduced on the screen, corresponding to a first television signal coming from a trasmitting station and/or from an auxiliary source, a second picture, having a size smaller than the first one, corresponding to a second television signal coming from a second transmitting station and/or from an auxiliary source, comprising second circuit means in order to enlarge the contents of said second picture and third circuit means in order to change the position of said second picture in respect of the first one.

## "Improved television receiver"

The present invention refers to an improved television receiver, providing a screen for reproducing pictures and a device comprising first circuit means in order to insert into a first picture, reproduced on the screen, corresponding to a first television signal coming from a trasmitting station and/or from an auxiliary source, a second picture, having a size smaller than the first one, corresponding to a second television signal coming from a second transmitting station and/or from an auxiliary source.

Owing to the fact that so many television programs are now available to the user, a problem is represented by the fact of waiting for the start of an interesting program of a transmitting station, that we shall call, for the sake of brevity, first station, while watching another program of another station, that we shall call second station, or a recorded program, said second program being for the moment more interesting of the program of the first station.

In order to solve the said problem one of the proposed solution is to insert in the first picture a second smaller picture so that it is possible to watch at the same time two programs; such an arrangement has been known with the english name of Picture in Picture (PIP) or, in Germany, Bild im Bild (BIB).

The proposed arrangement, nevertheless shows some drawbacks, for instance:
-the smaller picture may cover an interesting part of the main picture;
-the content of the smaller picture is too small to see, from a normal watching distance, what may be interesting, for instance to read an inscription.

It is evident that the two requirements are one the contrary of the other.

The aim of the present invention is that to indicate an improved television receiver allowing to avoid the drawbacks of the known devices, in particular the two abovesaid drawbacks.

With this aim in view the subject of the present invention is an improved television receiver, providing a screen for reproducing pictures and a device comprising first circuit means in order to insert into a first picture, reproduced on the screen, corresponding to a first television signal coming from a transmitting station and/or from an auxiliary source, a second picture, having a size smaller than the first one, corresponding to a second television signal coming from a second transmitting station and/or from an auxiliary source, characterized by second circuit means in order to enlarge the contents of said second picture.

With the same aim in view the subject of the present invention is also an improved television receiver providing third circuit means in order to change the position of said second picture in respect of the first one.

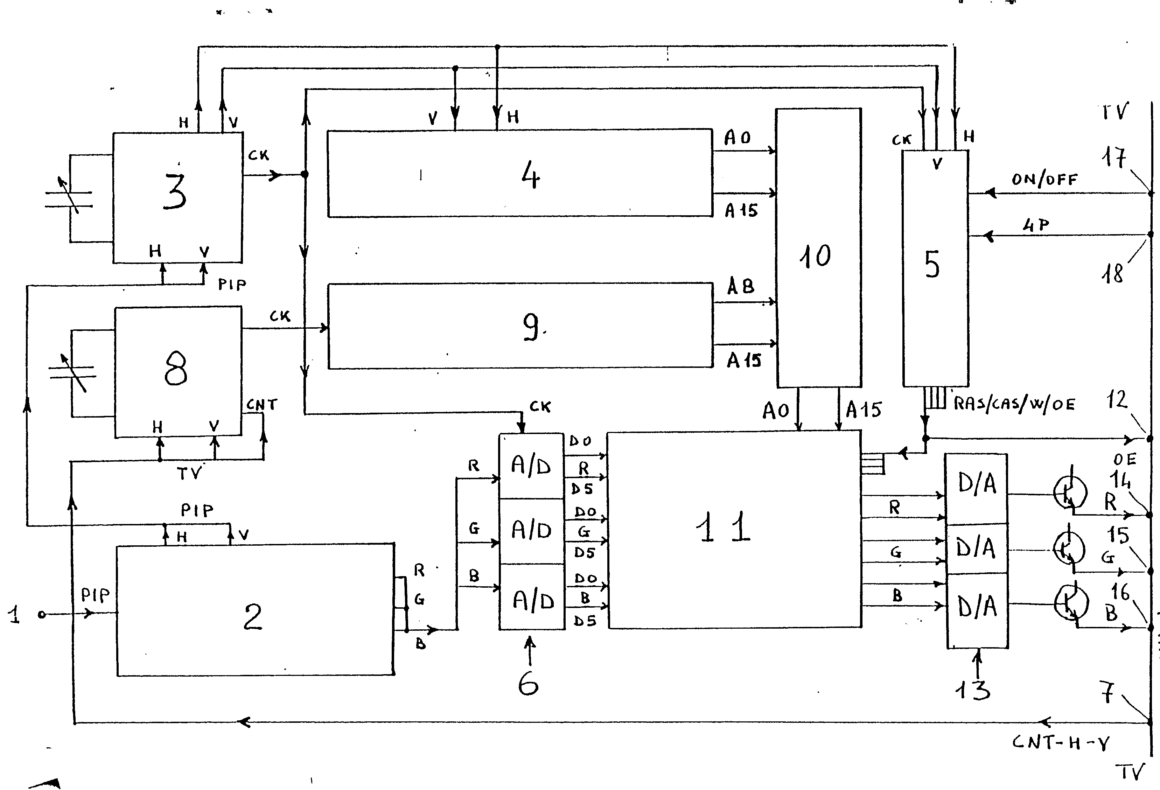

Other aims and advantages of the present invention shall become clearer after the detailed description which follows and from the attached drawings, given only as an informative non limiting example, where:
in the single figure there is represented the block diagram of the essential part of the device according to the invention.

In the figure, which represents the block diagram of the essential part of the device according to the invention, the reference numeral 1 indicates an input terminal where there is available the video signal corresponding to the second picture, which is to be inserted into the first one.

Said signal is fed to a circuit block, indicated by the reference numeral 2, comprising for instance the signal processing integrated circuits TDA 3565 and TDA 2579.

From block 2 the horizontal (H) and vertical (V) sync signals arrive to a circuit block, indicated by the reference numeral 3, which is a frequency generator at the frequency of 4.43 MHz (european colour subcarrier frequency) and represents the main clock of the system.

From block 3 the H and V sync signals arrive to a block 4, comprising a counter (main counter), and to a block 5, comprising a wired logic circuit (PROM), which will be described later on.

Form block 3 comes out also the main clock signal, which arrives to block 4, to block 5 and to a circuit block, indicated by the reference numeral 6, comprising three equal A. to D. signal converters.

On a signal input terminal, indicated by the reference numeral 7, there are available the horizontal (H) and vertical (V) sync signals of the main video signal, i.e. of the first television picture. Said sync signal arrive to a circuit block, indicated by the reference numeral 8, comprising a variable frequency generator (V.C.O. or Voltage Controlled Oscillator) which can range, for instance, from 8 to 18 MHz, and which represents the "Zoom effect" (i.e. the secondary picture enlargement) clock.

On terminal 7 there is also available the V.C.O. control voltage (for the enlargement control), which arrives to the block 8.

From block 8 comes out the frequency signal, or variable clock, which arrives to a circuit block, indicated by the reference numeral 9, comprising a counter (secondary picture counter). From said counter 8 address lines (A8-A15) come out, which, together with other 16 address lines (A0-A15), coming out from counter 4, arrive to a circuit block, indicated by the reference numeral 10, which comprises a multiplexer (MUX).

From block 10 come out 16 address lines for a circuit block, indicated by the reference numeral 11, which comprises a dynamic video memory (RAM) of 256x6 bits, column addressable, onto which the second picture is recorded in digitalized form.

In fact to memory 11 arrive also the data outputs (6 bits) of three A. to D. converters, contained in the block 6; said converters, in turn, receive from block 2 the second picture's R, G and B analog signals. To memory 11 arrive at last 4 auxiliary signals (RAS, i.e. Row Address, CAS, i.e. Column Address, W, i.e. Write, OE, i.e. Output Enable) from block 5. Said signals are also available at the output terminal indicated by the reference numeral 12, in order to allow the signal fast switching control of the two pictures.

At the output of memory 11 there are then available the digitalized R, G, B signals, which arrive to a circuit block, indicated by the reference numeral 13, comprising three D. to A. converters; the three analog signals obtained in this way are then sent, through three emitter-followers, to output terminals 14, 15 and 16.

At a signal input terminal, indicated by the reference numeral 17, there is available a consent signal, allowing the second picture reproduction (ON/OFF); at another signal input terminal, indicated by the reference numeral 18, there is available a signal which represents the position of the secondary picture in respect of the main one; said two signals, coming from terminals 17 and 18, arrive to block 5.

The operation of the described circuit is the following:
the video signal corresponding to the second picture, digitalized by block 6, with 64 levels for each one of the primary colours, is stored in memory 11, at the addresses which are delivered by block 10, and coming from counter 4, driven by the "normal" clock 3, which is synchronized by sync signals coming from the second picture.

The recorded picture on the contrary is read according to the rate of variable clock 8, synchronized with the main picture; this rate being faster, the picture is scanned in a shorter time and therefore compressed. Nevertheless as the reading frequency is variable also the compression ratio is variable. The read picture is then made analog again and sent to the output, in order to be inserted in the picture reproduced on the screen. It is convenient to use the fast switch normally available for the teletext signal on all the modern television receivers.

The wired logic circuit 5 combines, starting from clock, sync, on/off and position signals, the write and output enable signals and the address signals.

From the description made the advantages of the television receiver according to the invention shall now be clearer.

In particular they are represented by the fact that it is possible to enlarge the second picture in order to be able to see better the picture details, for instance to read an inscription contained in it; then it is possible to reduce again the size of the second picture, or to move it in a different position in order to free an interesting part of the main picture.

It is also clear that many variations are possible to the man skilled in the art, in respect of the described example, without departing from the scope of the present invention.

A first variation may be to add a control device allowing to stop the digitalization of the secondary picture, while leaving in operation the read and display processes. In this way a still secondary picture is created.

A second variation may be, for example, to create the "zoom effect" of the secondary picture, varying not the size of it, but only enlarging the central part of it, without changing the perimeter dimension. In order to achieve this result it is sufficient to make the reading count variable.

A third variation may consist in the use of other signal processing circuits inside block 2, so that at the output video signals may be available, in form of luminance (Y) signals and colour difference (R-Y and B-Y) signals. In this way the sampling of video signal may take place for the colour difference signals at a lower frequency and therefore it is possible to save memory cells in the video dinamic memory.

## Claims

1. Improved television receiver, providing a screen for reproducing pictures and a device comprising first circuit means in order to insert into a first picture, reproduced on the screen, corresponding to a first television signal coming from a transmitting station and/or from an auxiliary source, a second picture, having a size smaller than the first one, corresponding to a second television signal coming from a second transmitting station and/or from an auxiliary source, characterized by second circuit means (7,8,9,10) in order to enlarge the contents of said second picture.

BAD ORIGINAL

2. Improved television receiver, according to claim 1, characterized by the fact that said second means (7,8,9,10) allow to enlarge the size of said second picture, while keeping the contents unchanged.

3. Improved television receiver, according to claim 1, characterized by the fact that said second means allow to vary the enlargement of the contents of said second picture, while keeping the size of it unchanged.

4. Improved television receiver, according to any one of the preceding claims, characterized by the fact that there are provided third circuit means (5,18) in order to vary the position of said second picture in respect of the first one.

5. Improved television receiver, according to any one of the preceding claims, characterized by the fact that there is provided a variable frequency clock oscillator (8).

6. Improved television receiver, according to any one of the preceding claims, characterized by the fact that it comprises a triplet of A. to D. converters (6), a digital memory (11) and a triplet of D. to A. converters (13), in order to digitalize, store and obtain again in analog form the second picture.

7. Improved television receiver, according to claim 6, characterized by the fact that it comprises a wired logic circuit (5) in order to combine, starting from sync, clock and position data, the enabling signals for the said digital memory (11).

8. Improved television receiver, according to claims 5 and 6, characterized by the fact that it comprises a fixed frequency clock generator (3) which is used to write in the memory (11), while the variable frequency clock (8) is used to read the data out of the memory (11).

9. Improved television receiver, according to claim 6, characterized by the fact that it comprises two counters (4,9) and a multiplexer (10) in order to generate the addresses for the memory (11).

10. Improved television receiver, according to claim 9, characterized by the fact that there is provided a device apt to vary the count of one (9) out of the two counters.

11. Improved television receiver, according to claim 6, characterized by the fact that there is provided a control device in order to stop the digitalization of the secondary picture, while keeping it displayed on the screen as a still picture.

12. Improved television receiver, according to claim 5, characterized by the fact that there is provided a terminal (7) on which there is available a variable control voltage apt to control the variable frequency oscillator (8) and, as a consequence, the enlargement of the second picture.

13. Improved television receiver, according to claim 6, characterized by the fact that to said digital memory (11) there is sent a digital signal obtained starting from a video signal, and dividing it in its luminance (U) and colour difference (R-Y, B-Y) components.